# EUROPEAN PATENT APPLICATION

(11) **EP 1 147 920 A2**
(43) Date of publication of application: **24.10.2001**
(21) Application number: 00311756.1
(22) Date of filing: 28.12.2000
(51) Int. Cl.: B42D 15/00, B41M 3/14

(54) **Sheet with forgery prevention means**

(30) Priority: 28.12.1999 JP 37501899
(71) Applicant: Dynic Corporation, Kyoto-shi, Kyoto (JP)
(72) Inventor: Haneda, Akira, Minato-ku, Tokyo (JP); Kurihara, Hideo, Minato-ku, Tokyo (JP)
(74) Representative: Dealtry, Brian

(57) **Abstract**

Disclosed is a forgery prevention sheet comprising at least triple-layered construction including a base (2) and outer layers (1) and (3) formed on both side of said base. The outer layers have opacity of 20-92%, preferably of 40-92%. The inner surface of at least one (1) of the outer layers is printed with a fluorescent pigment ink into a predetermined design pattern. The printed pattern is not visible under the sunlight, but becomes visibly luminous to human's naked eye, when the sheet is irradiated with ultraviolet rays from the top and from the bottom. The sheet has no fluorescent ink on or near the top surface and, therefore, provides good printability when subjected to post-printing process with any printing system including a lithographic offset printing press, a laser printer and a thermal transfer printer. The sheet is particularly applicable to a tag label on big-name brands' care labels on clothing, on which a specific logotype or character representing its big-name brand may be printed with a unique visual pattern.

## Description

### BACKGROUND OF THE INVENTION

### Field of the Invention

The present invention relates to a forgery prevention sheet having an improved forgery prevention effect, which may be effectively used as a sheet of bank note, bills, checks, stock certificates, bonds, gift certificates, betting tickets on horse or bicycle race, various kinds of notes, various kinds of cards, passports, etc. The forgery prevention sheet according to the present invention may also be used as a tag label on big-name brands' care labels on clothing, on which a specific logotype or character representing its big-name brand may be printed with a unique visual pattern that can hardly be copied and forged.

### Description of the Prior Art

The above-exemplified notes and papers are valuable and, therefore, should be prevented from being illegally copied, forged and altered by distinguishing a counterfeit from a genuine one.

One of the prior art forgery prevention sheet comprises a base on which a predetermined pattern is printed with an ink including a fluorescent pigment or dye that generates a fluorescent light when irradiated with ultraviolet rays from a black light. This prior art, however, does not provide a sufficient forgery prevention effect because it would easily be copied when a forger is successful in obtaining a fluorescent pigment/dye which becomes luminuous in the same or similar hue when irradiated with ultraviolet rays. Moreover, because the surface of this prior art forgery prevention sheet has different physical characteristics between printed and non-printed areas, the printed pattern would be visible even to the naked eyes without being subjected to ultraviolet rays. When this sheet is put into post-printing process with a normal ink by a known printing system including a laser printer, a laser printer or a thermal transfer printer, there may cause a printing trouble and/or uneven luster due to the physical characteristic differences of the surface of the sheet. Accordingly, this prior art forgery prevention sheet has poor printability.

To cope with the above-identified problems, Japanese patent publication No. 9 (1997)-52431 proposes to make printing with a water-soluble, fluorescent ink while a sheet or paper is still wet during paper-making process, so that the ink is impregnated into the paper. Even with this method, most of the ink tends to exist on or near the surface of the sheet, which would affect the printability.

In Japanese patent publication No. 3 (1991)-230996, a predetermined pattern is printed with a transparent ink on an opaque layer that is formed on a base paper in which fluorescer is wholly and evenly dispersed. When this sheet is irradiated with ultraviolet rays, the fluorescer in the base paper becomes luminous in the shape of the transparent print pattern. However, the base paper including the dispersed fluorescent dye is not sufficiently resistant to ultraviolet rays and, therefore, the forgery prevention effect would disappear after relatively short-term use. Dispersion in the entirety of the base paper requires a greater amount of the fluorescent pigment which is expensive, thereby increasing the manufacturing costs of the forgery prevention sheet.

### SUMMARY OF THE INVENTION

Accordingly, it is an object of the present invention to eliminate all of the shortcomings and drawbacks of the prior art forgery prevention sheets.

Another object of the present invention is to provide a forgery prevention sheet having a surface free from fluorescer, which improves printability when subjected to post-printing process.

Still another object of the present invention is to provide an improved forgery prevention sheet which is not easy to be copied even if a forger gets the same or similar fluorescer or ink.

Yet another object of the present invention is to manufacture a forgery prevention sheet at a lower cost by using expensive fluorescer only at printing areas in a predetermined pattern.

To achieve the above-described objects, in accordance with a first aspect of the present invention, there is provided a forgery prevention sheet comprising at least triple-layered construction including a base and outer layers formed on both side of said base, said outer layers having opacity of 20-92%, an inner surface of at least one of said outer layers being printed with a fluorescent pigment ink. The preferable range of opacity of the outer layers is 40-92%.

In accordance with another aspect of the present invention, there is provided a forgery prevention sheet comprising a base, a first paper layer formed on a first side of said base and having opacity of 20-92% and a second paper layer formed on a second side, opposite to said first side of said base and having opacity of 20-92%, an underside of at least one of said first and second paper layers is printed with a fluorescent pigment ink.

In accordance with still another aspect of the present invention, there is provided a forgery prevention sheet comprising a base, a print layer formed by printing with a fluorescent pigment ink on one side of said base, a first coating layer formed on a non-printed side of said base, and a second coating layer formed on said print layer, both of said first and second coating layers having opacity of 20-92%.

In accordance with still another aspect of the present invention, there is provided a forgery prevention sheet comprising a base, a print layer formed by printing with a fluorescent pigment ink on one side of said base, a first paper layer formed on a non-printed side of said base, and a second paper layer formed on said print layer, both of said first and second paper layers having opacity of 20-92%.

In the forgery prevention sheet of the present invention, the base material may comprise paper, film, woven or non-woven fabric or any combination thereof. When a film, woven or non-woven fabric or any material other than paper is used as the base material, or when such material is laminated on paper to form the base, it provide unique feeling and touch distinguishable over a usual paper sheet. When such base material is torn down, it also provides a different feeling and a different cross-section appearance rather than the usual paper sheet.

In accordance with the present invention, the surface of the forgery prevention sheet is free from fluorescent ink and, rather, comprises paper or coating layer which is suitable for printing with any printing system including a lithographic offset printing press, a laser printer and a thermal transfer printer. The forgery prevention sheet of the present invention provides an improved printability and prevents any troubles in a post-printing process. The pattern printed in the post-printing process looks attractive, because there is a uniform luster over the entire surface of the forgery prevention sheet due to non-existence of the fluorescent ink therearound.

In the forgery prevention sheet of the present invention, only a limited amount of the fluorescent ink which is expensive is used to print a studded pattern, which surely lowers a manufacturing cost.

While the fluorescent print pattern is positioned at the middle of thickness of the forgery prevention sheet, it becomes luminous and visible from the top of the sheet, when ultraviolet rays are irradiated onto the top or bottom of the sheet, whereas it is not visible even when it is held up against the sunlight. from the top or bottom. It is easy for a unskilled person to tell whether a sheet is genuine or false by irradiation of ultraviolet rays to the sheet from a black light lamp. Without use of the black light lamp, no one knows that there is a fluorescent print pattern within the sheet. The surface of the sheet of the present invention includes no fluorescent pigment and, therefore, provides good printability. Accordingly, the forgery prevention sheet is effectively and suitably applicable not only to bank note or other valuable sheet which needs a high degree of forgery judgment skill but also to a tag label on big-name brands' care labels on clothing, on which a specific logotype or character representing its big-name brand may be printed with a unique visual pattern that can hardly be copied and forged.

### BRIEF DESCRIPTION OF THE DRAWINGS

Fig. 1 is a cross-section of a forgery prevention sheet embodying the present invention;
Fig. 2 is a cross-section of a forgery prevention sheet in accordance with another embodiment of the present invention;
Fig. 3 is a cross-section of a forgery prevention sheet which does not fall within a range of the present invention;
Fig. 4 is a cross-section of a forgery prevention sheet in accordance with still another embodiment of the present invention; and
Fig. 5 is a cross-section of a forgery prevention sheet in accordance with still another embodiment of the present invention.

### DETAILED DESCRIPTION OF THE PREFERRED EMBODIMENT

### <Test 1>

Calcium carbonate was added into wood pulp (NBKP 10% + LBKP 90%) in an amount of 15% to the pulp weight. The resulting pulp was subjected to the usual paper making process to produce fine-quality paper having basis weight of 8g/m², 20g/m², 30g/m², 50g/m² and 130 g/m², respectively. The surface of the paper was then coated with sizing agent and starch and calendered to prepare five paper samples. The opacity of each paper sample was measured in accordance with the method described in JIS (Japanese Industrial Standards) P8138 entitled "Opacity of Paper", the results of which are shown in the following Table I.

**Table I**

| Basis Weight (g/m²) | Opacity (%) |
|---|---|
| 8 | 15 |
| 20 | 41 |
| 30 | 56 |
| 50 | 75 |
| 130 | 95 |

A fluorescent dispersion ("LUMILUX YELLOW CD 997" (trademark), manufactured by Riedel-de Haen GmbH) including yellow-green fluorescent is mixed with acrylic emulsion to produce a fluorescent ink, which was printed into a star-studded pattern, with a gravure printer, onto the undersides of the respective paper samples.

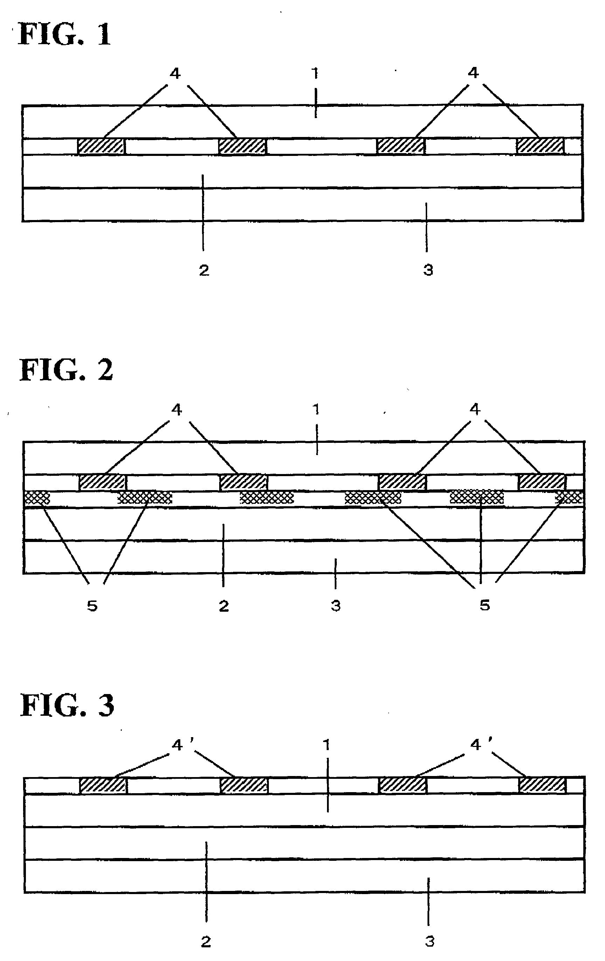

The five paper samples with the fluorescent star-studded patterns on the underside thereof were used as the top layer, and the paper samples having the same basis weight with the top layer but no fluorescent patterns were used as the bottom layer. A biaxially-oriented transparent PET film interposed therebetween was used as a base. These were layered and laminated one another in a known dry-laminating process to prepare laminates having triple-layered construction of the top paper layer 1 with the fluorescent prints 4 on the backside thereof, the PET film 2 and the bottom paper 3, such as shown in Fig. 1.

The respective test samples were subjected ultraviolet rays from a 4W black light lamp, from the top and from the bottom, respectively, to observe by naked eyes how the fluorescent star-studded pattern became luminous in yellow-green color, from the top. The results are shown in the following Table II. A flashlight sold as "LK-K3400" by Sanyo Electric Co., Ltd. equipped with a 4W lamp sold as "National FL4BL-B" was used as the 4W black light lamp. In Table II, a symbol "○" indicates that fluorescence of the printed star-studded pattern was clearly observed, a "Δ" symbol indicates that such was dimly observed and a "×" symbol indicates that such was hardly observed.

The respective test samples were also subjected to another naked-eye observation wherein they are held up against the sunlight to confirm how the printed pattern is confirmed. The results of such observation are also shown in the following Table II. Regarding the results of this observation in Table II, a "○" symbol indicates that the printed star-studded pattern could not at all visible to. the naked eyes under the sunlight, a "Δ" symbol indicates that such was dimly observed and a "×" symbol indicates that such was clearly observed.

**Table II**

| TOP LAYER | BOTTOM LAYER | UV IRRADIATION | | UNDER THE SUNLIGHT | |
|---|---|---|---|---|---|
| | | FROM TOP | FROM BOTTOM | FROM TOP | FROM BOTTOM |
| 8g/m² PAPER WITH PRINT | 8g/m² PAPER WITH NO PRINT | ○ | ○ | × | × |
| 20g/m² PAPER WITH PRINT | 20g/m² PAPER WITH NO PRINT | ○ | ○ | Δ | Δ |
| 30g/m² PAPER WITH PRINT | 30g/m² PAPER WITH NO PRINT | ○ | ○ | ○ | ○ |
| 50g/m² PAPER WITH PRINT | 50g/m² PAPER WITH NO PRINT | ○ | ○ | ○ | ○ |
| 130g/m² PAPER WITH PRINT | 130g/m² PAPER WITH NO PRINT | × | × | ○ | ○ |

As shown, when the paper having basis weight of 8g/m² was used as the top layer 1 and the bottom layer 3 (the first sample in Table II), the star-studded pattern printed with the fluorescent ink became clearly visible by irradiation of ultraviolet rays. However, when this sample was held up against the sunlight, it could easily be recognized that it includes the printed pattern. As to the last sample in which both of the top layer 1 and the bottom layer 3 comprised the paper of 130g/m², on the contrary, the printed pattern was not visible under the sunlight, but it gave no fluorescence to the naked eyes when irradiated with ultraviolet rays, which means that it has no forgery prevention effect. Accordingly, in order that the star-studded pattern printed with the fluorescent ink on the underside of the sample becomes visibly luminous by irradiation of ultraviolet rays whereas it is hardly observed under the sunlight, the paper to be used as the top and bottom layers 1, 3 must have opacity ranging from 20% to 92%. The results of observation under the sunlight regarding the second sample in which the paper has basis weight of 20g/m² were not always satisfactory, because the printed pattern was still visible to some extent. Therefore, The lower limit of opacity of the paper to be used as the top and bottom layers 1, 3 should preferably be 40% or more.

### <Test 2>

The paper having basis weight of 50g/m² was used as the top and the bottom layers 1, 3 of the test samples. To the underside of the paper to be used as the top layer 1, a star-studded pattern was printed with a fluorescent ink in the same manner as Test 1, on which another, flower-studded pattern was printed with a transparent ink composed of 80 parts by weight of "CLARITEN DC" (trademark) manufactured by Daiwa Chemical Industry Co., Ltd. and 20 parts by weight of toluene. This paper 1 having the fluorescent star-studded pattern 4 and the flower-shaped watermarks 5 was laminated on the paper of the same basis weight with no print, with a biaxially-oriented transparent PET film interposed therebetween, in a known dry-laminating process, to prepare a test sample having construction as shown in Fig. 2.

This test sample was subjected to naked-eye observation from the top, by irradiation of ultraviolet rays from the top and from the bottom and under the sunlight from the top and from the bottom, as in the same manner in Test 1. The results were substantially the same as shown in Table II regarding the fourth sample using the paper having basis weight of 50g/m². More particularly, this sample was proved to be very good for use as a forgery prevention sheet according to the present invention, because the star-studded pattern 4 printed with the fluorescent ink on the underside thereof became visibly luminous by irradiation of ultraviolet rays but was not visible even when it is held up to the sunlight. When this sample was held up against the sunlight, the flower-shaped watermarks 5 could be observed from the top, as well as from the bottom.

### <Test 3>

The top layer paper 1, the intermediate PET film 2 and the bottom layer paper 3 are laminated in substantially the same manner as in Test 1, except that the top layer paper 1 was used upside-down so that the fluorescent print pattern 4' was formed on the upper surface thereof, the non-printed underside thereof facing the PET film 2, as shown in Fig. 3.

The top surface of this control sample was printed with a usual ink into a design pattern with a sheet-feed offset press. Because the printed area 4' and the non-printed area on the surface of the top layer paper 1 showed different ink-absorbing characteristics, this control sample provided uneven luster. While the fluorescent star-studded printed pattern was clearly observed by irradiation of ultraviolet rays from the top of this control sample, it could be observed by irradiation from the bottom only in a dark room. More disadvantageously, the fluorescent print pattern 4' could easily and clearly be observed from the top under the sunlight.

### <Test 4>

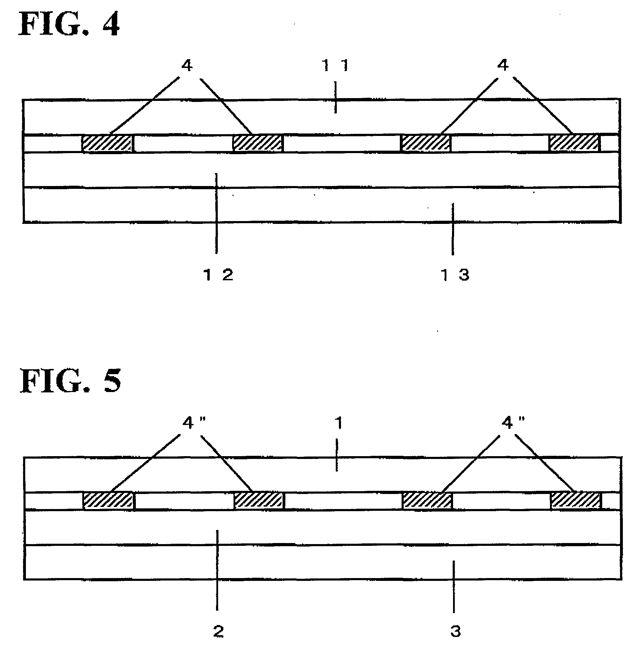

The surface of a fabric woven from 70-denier nylon yam was printed with a fluorescent ink, the same as that used in Test 1, ink into the same star-studded pattern with a gravure printing press. The opposite sides of this woven fabric 12 having the fluorescent print pattern 4 on the underside thereof were coated with resin material composed of 20 parts by weight of 6-nylon, 58 parts by weight of methanol, 24 parts by weight of calcium chloride and 7 parts by weight of calcium carbonate, in such manner that the coating layers have opacity of 70% after calendered, followed by soaking in water for five minutes, washing in water, drying in air and calendering to prepare a white sample sheet having micro-porous nylon coating layers 11, 13 having basis weight of 70g/m² and opacity of 70% on both surfaces thereof. This sample has construction as shown in Fig. 4, and flat and smooth surfaces.

This test sample was subjected to naked-eye observation from the top, by irradiation of ultraviolet rays from the top and from the bottom and under the sunlight from the top and from the bottom, as in the same manner in Test 1. When irradiated with ultraviolet rays, both from the top and from the bottom, the star-studded pattern 4 became luminous in yellow-green color, which was clearly visible by the naked eyes from the top of the sample. Even when this sample was held up to the sunlight, the printed pattern 4 was not at all visible to the naked eyes. Further, this sample was proved to have good printability when post-printed with any printer, including a lithographic offset printing press and a thermal transfer printer. Accordingly, this sample is a preferred embodiment of the present invention.

### <Test 5>

The top layer paper 1, the intermediate PET film 2 and the bottom layer paper 3 are laminated in substantially the same manner as in Test 1, except that the fluorescent star-studded pattern 4" is printed not onto the underside of the top layer paper 1 but onto the upper surface of the PET film 2, to prepare a sample having construction shown in Fig. 5.

This test sample was subjected to naked-eye observation from the top, by irradiation of ultraviolet rays from the top and from the bottom and under the sunlight from the top and from the bottom, as in the same manner in Test 1. When irradiated with ultraviolet rays, both from the top and from the bottom, the star-studded pattern 4" became luminous in yellow-green color, which was clearly visible by the naked eyes from the top of the sample. Even when this sample was held up to the sunlight, the printed pattern 4" was not at all visible to the naked eyes. This sample was proved to have good printability when post-printed with any printer, including a lithographic offset printing press and a thermal transfer printer. Accordingly, this sample is also a preferred embodiment of the present invention.

## Claims

1. A forgery prevention sheet comprising at least triple-layered construction including a base and outer layers formed on both side of said base, both of said outer layers having opacity of 20-92%, an inner surface of at least one of said outer layers being printed with a fluorescent pigment ink.

2. A forgery prevention sheet according to claim 1 wherein both of said outer layers have opacity of 40-92%.

3. A forgery prevention sheet comprising a base, a first paper layer formed on a first side of said base and having opacity of 20-92% and a second paper layer formed on a second side, opposite to said first side of said base and having opacity of 20-92%, an underside of at least one of said first and second paper layers is printed with a fluorescent pigment ink.

4. A forgery prevention sheet comprising a base, a print layer formed by printing with a fluorescent pigment ink on at least one side of said base, a first coating layer formed on a non-printed side of said base, and a second coating layer formed on said print layer, both of said first and second coating layers having opacity of 20-92%.

5. A forgery prevention sheet comprising a base, a print layer formed by printing with a fluorescent pigment ink on at least one side of said base, a first paper layer formed on a non-printed side of said base, and a second paper layer formed on said print layer, both of said first and second paper layers having opacity of 20-92%.
